# EUROPEAN PATENT SPECIFICATION

(11) **EP 0 357 777 B1**
(45) Date of publication and mention of the grant of the patent: **24.02.1993**
(21) Application number: 88909368.8
(22) Date of filing: 31.10.1988
(51) Int. Cl.: B29C 45/14, B65D 1/02

(54) **METHOD OF INSERTING PIECE INTO PREFORM MOUTH FORMING MOLD**
VERFAHREN ZUM EINLEGEN EINES TEILES IN EINE FORM ZUM HERSTELLEN EINES VORFORMMUNDSTÜCKS
PROCEDE D'INSERTION D'UNE PIECE DANS UN MOULE DE FORMAGE DE BOUCHE DE PREFORME

(30) Priority: 31.10.1987 JP 277015/87
(43) Date of publication of application: 14.03.1990
(73) Proprietor: NISSEI ASB MACHINE CO., LTD., Nagano-ken 384 (JP)
(72) Inventor: ORIMOTO, Hiroyuki Nissei ASB Machine Co., Ltd., Komoro-shi Nagano-ken 384 (JP); AOKI, Daiichi Nissei ASB Machine Co., Ltd., Komoro-shi Nagano-ken 384 (JP); MIYAZAWA, Yoshiki Nissei ASB Machine Co., Ltd., Komoro-shi Nagano-ken 384 (JP)
(74) Representative: Schrimpf, Robert
(86) International application number: PCT/JP88/01112
(87) International publication number: WO 89/03755

(56) References cited:
- JP-A-59 220 343
- JP-A-62 180 762

## Description

### FIELD OF THE ART

This invention relates to a method of inserting various pieces provided within a mouth of a preform into a mouth of a container formed of synthetic resin, for example, polyethylene terephthalate for the purpose of improving heat resistance, chemical resistance and strength.

### BACKGROUND

It has been known that a tubular synthetic resin piece having a heat resistant resin layer is inserted into a mouth of a container principally formed of polyethylene terephthalate, and the mouth of the container is formed into a double or three layers by the piece to improve the heat resistance or the like of the mouth of the container.

Most of the heat resistant layer of the mouth formed by the piece is formed on the surface of the mouth since the piece is inserted into a cavity which molds the mouth, after which resin which forms a container body is poured.

In formation of a mouth of a container into a multilyer by the insert as described above, the piece to be inserted has already been solidified, and therefore there arises a problem in adhesiveness with respect to the poured molten resin. In addition, since properties thereof are different from each other, and even if they are integral when molded, they tend to be peeled off when an external force is applied thereto. As the case may be, they cannot withstand the external force due to the peeling, and as a result, the piece becomes cracked, failing to achieve the object as a container.

In view of the foregoing, it is proposed that a piece is inserted into a mouth of a container as described in Japanese Patent Application Laid-Open No. 61-259946. In case of the piece embedded, since the whole piece is covered by the container forming resin, a high load such as torque acting on the piece from the exterior is less than that when the piece is present on the surface. Even if peeling occurs, a contour of a mouth of a container is maintained, thus bringing forth the merit that there constitutes no obstacle to the specification of the mouth.

However, it is very difficult to insert a piece into a middle portion of the mouth of the container. Especially, there is a problem in that a position of the piece is mechanically supported within a mold against the pouring pressure of the molten resin. Where the side of the piece is supported by means of a pin or the like away from the mold surface, if there are less supporting points, the piece is deviated and cannot be inserted into a predetermined position. Furthermore, a pin trace remains in the molded mouth, and therefore the obtained article is not preferable as goods. The construction of the mold is complicated as compared with a conventional mold. There are many molding losses. Cost increases. It is therefore necessary to further improve the heat resistance of the mouth of a container with a piece used as an intermediate layer.

### DISCLOSURE OF THE INVENTION

This invention has been achieved in view of the above-described circumferences. It is one object of the invention to provide a new method of inserting a piece into a mold for molding a mouth of a preform in which where a heat resistance is applied to a mouth of a container by a piece formed of a heat resistant resin as an intermediate layer, the piece itself is supported directly on the mold without using mechanical means to make an insertion thereof into the mold positive, and in pouring the resin for molding a container, it can well withstand the pouring pressure not to give rise to a deviation in position.

It is a further object of this invention to provide a method of inserting a piece into a mold for molding a mouth of a preform which utilizes a cavity surface of a mold for molding an outer side of the mouth and a cavity recess for molding a support ring to firmly support the piece in both longitudinal and lateral directions.

For achieving the aforesaid objects, this invention provides a method wherein in inserting a short tubular piece, which is accommodated in a mouth of a preform of a synthetic resin container and has on the side of a body a projection accommodated in a support ring formed externally of the mouth of the container, into a mold for molding a mouth of a preform having a cavity recess for molding a support ring, spacers in the form of projections are integrally formed at fixed intervals on the outer side of said piece and the fore end of the first mentioned projection, the piece is inserted into a central portion of the opened mold for molding a mouth, after which the mold is closed and said projection is inserted into a cavity recess, the spacers are pressed against the cavity surface, and the piece is held and fixed to the central portion of the cavity by the mold through said spacers.

In the insertion of the piece by the aforementioned means, after the piece is once inserted, it need not be held by other members, and the piece can be always inserted into a fixed position. Furthermore, since the piece is supported by the body and the projection positioned in the cavity recess, the piece becomes hard to be deviated in both longitudinal and lateral directions and the piece is not deviated in position during the movement of the mold for molding a mouth. Moreover, no difficulty involves in the thereafter insertion of a core mold and involves no damage to the mold due to the deviation of position. Furthermore, the piece can well withstand the injection pressure when a preform is molded, and therefore, the piece will not be deviated in position due to the injection pressure and exposed to the surface of the mouth, and the connection between the mouth molding resin and the piece becomes further tightened by the spacers projected into the mouth molding resin.

### BRIEF DESCRIPTION OF THE DRAWINGS

The drawings show an embodiment of a method for inserting a piece into a mold for molding a mouth of a preform according to this invention.

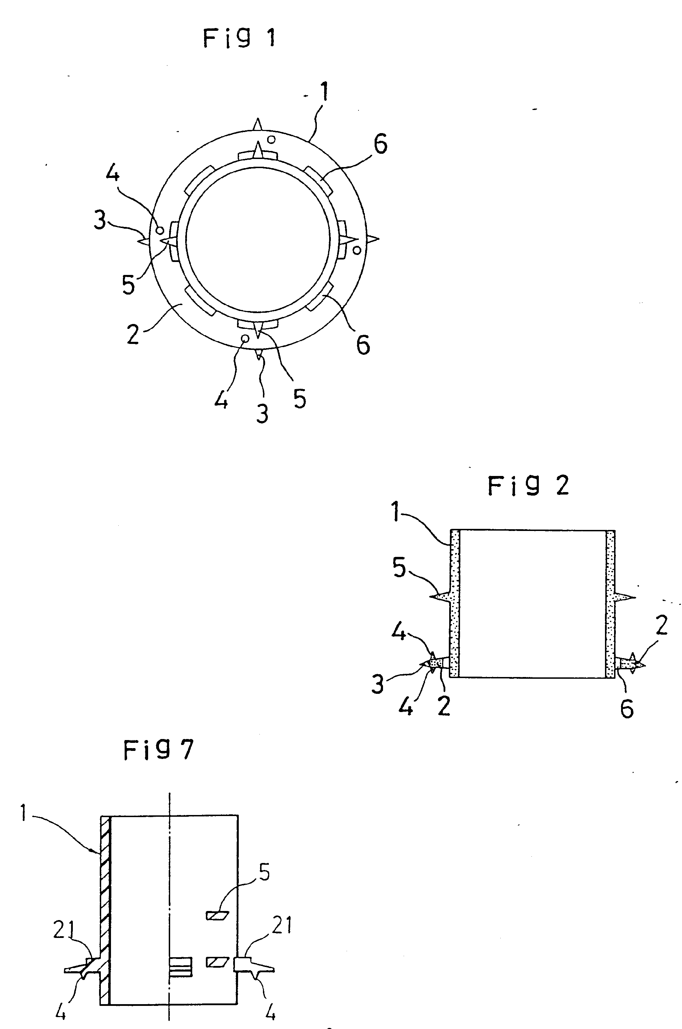

FIG. 1 is a plan view of a piece.

FIG. 2 is a longitudinal sectional view of the piece.

FIGS. 3 to 5 are respectively longitudinal sectional views of a mold for molding a mouth showing the steps of insertion in order.

FIG. 6 is a longitudinal sectional view of a preform mouth insert-molded.

FIG. 7 is a longitudinal sectional front view of a half portion of a piece according to another embodiment.

### BEST MODE FOR CARRYING OUT THE INVENTION

Reference numeral 1 denotes a short tubular piece inserted as an intermediate layer into a mouth of a preform, the piece being formed from an injection molded body made of synthetic resin excellent in heat resistance such as polycarbonate, polyamide, etc., in which a projection, for example, a flange 2 positioned within a support ring formed under the mouth of the preform is integrally formed on the outer side at the lower portion thereof.

Spacers 3, 4 and 5 in the form of projections having a predetermined length and being convergent are projected at fixed intervals on the end edge of the flange 2, the upper and lower surfaces and the side of the body, and a number of through holes 6 are bored in a connection between the side of the body and the flange.

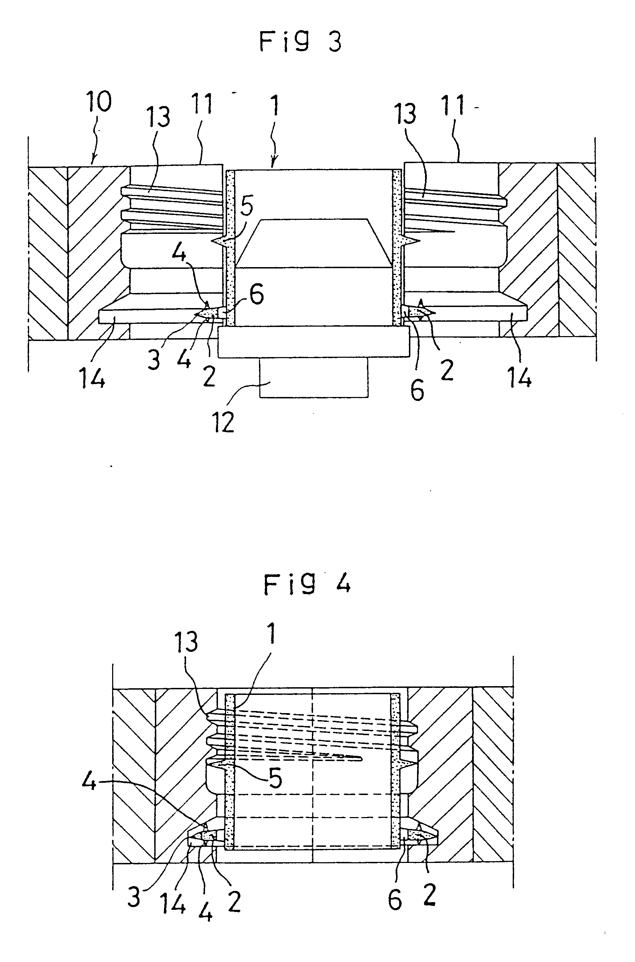

When a mold 10 for molding a mouth of a preform comprising a pair of split molds 11 and 11 is opened as shown in FIG. 3, the piece 1 is placed on a member 12 from the underside of the mold and is inserted into a central portion of the split molds 11 and 11.

The surface of the split molds 11, 11 comprises a thread forming surface 13 and a cavity recess 14 for molding a support ring thereunder. Insertion is stopped at a position where the flange 2 is positioned at the cavity recess 14 to stop the member 12, and the piece 1 is held in that state.

After the piece has been inserted as described above, the split molds 11 and 11 are closed in the conventional means. By this closure, the piece 1 is accommodated within the mold 10 for molding a mouth as shown in FIG. 4, and the flange 2 is moved into the cavity recess 14. Within the cavity recess, the spacers 3 and 4 are urged against the mold surface, and in the thread forming surface 13, the spacer 5 on the side of the body is urged against the mold surface and is held by the mold, whereby the piece 1 is locked within the mold for molding a mouth.

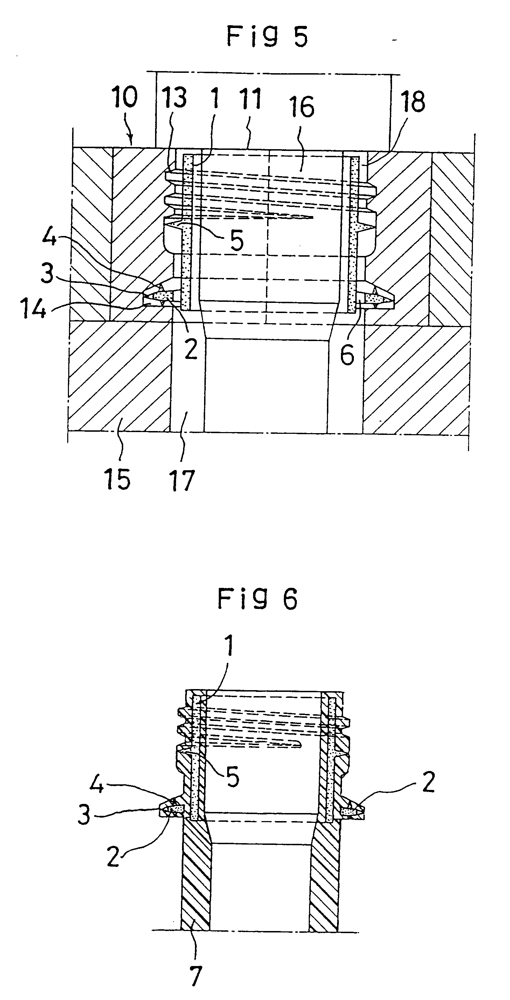

The mouth molding mold 10 accommodating therein the piece 1 is moved onto the preform molding mold 15 as shown in FIG. 5 after the member 12 has been moved downwardly of the mold and removed out of the piece 1, and the core mold 16 is inserted from the top. The core mold 16 causes the mouth molding cavity 18 in communication with the cavity 17 of the preform molding mood 15 to occur within the mouth molding mold, and a space into which preform forming resin is filled is secured by the spacers 3, 4 and 5 in the periphery of the piece 1 positioned in the cavity.

Molding of a preform is carried out by clamping the mold, and thereafter injecting resin such as polyethylene terephthalate into the cavity 17. The thus injected resin is filled into the mouth molding cavity 18 from the cavity 17 to form a preform 7 having a sectional construction as shown in FIG. 6, that is, a preform in which the piece 1 is provided as an intermediate layer internally of the mouth 8.

In the piece 1 shown in FIG. 7, flat triangular projections indicated at 21 in place of the flange are integrally formed at fixed intervals in a circumferential direction, and the spacer 4 is projected only under side of the projection 21. In such a piece 1, the flowability of the poured resin is excellent and the flow resistance is small as compared with the flange, and therefore, molding of a mouth of a container is further facilitated.

Material of the piece 1 is not limited to the synthetic resin alone but inorganic material such as rubber, glass and the like and metal material may also be used.

### INDUSTRIAL APPLICABILITY

As described above, according to this invention, the piece is supported within the cavity by the mold through the spacers in the form of projections formed integral with the piece. Therefore, the mouth molding mold may be as it is, and the piece can be supported in multidirection to prevent a deviation of position after insertion. The invention is very effective as an insertion of a piece such that special operation other than the mold closure is not required, and it can well withstand the pouring pressure of the resin. Therefore, the method of this invention may be extensively utilized in the molding industry of synthetic resin containers.

## Claims

1. A method of inserting a piece into a mold for molding a mouth of a preform by inserting a short tubular piece, which is accommodated in a mouth of a preform of a synthetic resin container and has on the side of a body thereof a projection accommodated in a support ring formed externally of the mouth of the container, into a mold for molding a mouth of a preform having a cavity recess for molding a support ring, spacers in the form of projections are integrally formed at fixed intervals on the outer side of said piece and the fore end of the first mentioned projection, the piece is inserted into a central portion of the opened mold for molding a mouth, after which the mold is closed and said projection is inserted into a cavity recess, the spacers are pressed against the cavity surface, and the piece is held and fixed to the central portion of the cavity by the mold through said spacers.

2. The method according to Claim 1, wherein said projection of the piece comprises a flange having through holes for the resin evey required locations.

3. The method according to Claim 1, wherein said piece is formed of synthetic resins excellent in heat resistance such as polycarbonate, and polyamide.

4. The method according to Claim 1, wherein said piece is formed of inorganic material such as rubber, glass and metal material.

## Patentansprüche

1. Verfahren zum Einsetzen eines Teils in eine Form zum Formen eines Vorformmundstückes durch Einsetzen eines kurzen Rohrteiles, welches in einem Vorformmundstück eines Behälters aus synthetischem Kunstharz aufzunehmen ist und an der Seite seines Körpers einen Vorsprung aufweist, welcher in einem außerhalb des Behältermundes zu formenden Stützring aufzunehmen ist, in eine Form zum Formen des Vorformmundstückes mit einer Ausnehmung zum Formen des Stützringes, wobei einstückig angeformte Abstandhalter in Gestalt von Vorsprüngen in festgelegten Abständen an der Außenseite des Rohrstückes und am vorderen Ende des genannten Vorsprunges angebracht sind, und wobei das Rohrteil in einen zentralen Abschnitt der geöffneten Form zum Bilden des Vorformmundstückes eingesetzt wird, worauf die Form geschlossen und der Vorsprung in die Ausnehmung eingeführt wird, die Abstandhalter gegen die Oberfläche der Ausnehmung gedrückt werden und das Rohrteil im zentralen Abschnitt des Formhohlraumes von der Form mittels der Abstandhalter gehalten und fixiert wird.

2. Verfahren nach Anspruch 1, bei dem der Vorsprung des Rohrteiles einen Flansch mit Durchgangslöchern für den Kunstharz an den erforderlichen Stellen aufweist.

3. Verfahren nach Anspruch 1, bei dem das Rohrteil aus synthetischem Kunstharz mit ausgezeichneter Hitzebeständigkeit, wie Polykarbonat oder Polyamid, geformt ist.

4. Verfahren nach Anspruch 1, bei dem das Rohrteil aus einem anorganischen Werkstoff, wie Gummi, Glas oder Metall geformt ist.

## Revendications

1. Procédé d'insertion d'une pièce dans une moule pour mouler une embouchure d'une préforme par insertion d'une courte pièce tubulaire qui convient pour une embouchure d'une préforme d'un conteneur en résine synthétique et comporte sur le côté de son corps une saillie qui convient pour une bague de support formée à l'extérieur de l'embouchure du conteneur, dans un moule pour moulage d'une embouchure d'un préforme comportant un évidement de cavité pour mouler une bague de support, des butées d'écartement en forme de saillie sont formées, solidaires, à intervalles fixés sur le côté extérieur de ladite pièce et sur l'extrémité de devant de la première saillie mentionnée, la pièce est insérée dans une partie centrale du moule ouvert pour moulage d'une embouchure, après quoi le moule est fermé et ladite saillie est insérée dans un évidement de cavité, les butées d'écartement sont pressées contre la surface de cavité et la pièce est maintenue et fixée par le moule à la partie centrale de la cavité par l'intermédiaire desdites butées d'écartement.

2. Procédé selon la revendication 1, dans lequel ladite saillie de la pièce comprend une bride comportant des trous de passage pour la résine à chaque emplacement requis.

3. Procédé selon la revendication 1, dans lequel ladite pièce est formée de résines synthétiques excellentes en résistance à la chaleur telles que polycarbonate et polyamide.

4. Procédé selon la revendication 1, dans lequel ladite pièce est formée de matériau inorganique tel que caoutchouc, verre et matériau métallique.
